# EUROPÄISCHE PATENTSCHRIFT

(11) **EP 2 072 819 B1**
(45) Veröffentlichungstag und Bekanntmachung des Hinweises auf die Patenterteilung: **09.02.2011**
(21) Anmeldenummer: 08172351.2
(22) Anmeldetag: 19.12.2008
(51) Int. Cl.: F04B 43/04

(54) **Pumpenkammer und Verfahren zur Herstellung der Kammern**
Pump chamber and method for manufacturing the chamber
Chambre de pompe et procédé de fabrication de cette chambre

(30) Priorität: 21.12.2007 DE 102007061920
(43) Veröffentlichungstag der Anmeldung: 24.06.2009
(73) Patentinhaber: PARItec GmbH, 82319 Starnberg (DE)
(72) Erfinder: Lass, Joseph, Dr., 80798 München (DE)
(74) Vertreter: HOFFMANN EITLE

(56) Entgegenhaltungen:
- EP-A- 0 025 005
- WO-A-02/28532
- WO-A-2004/081390
- DE-A1- 4 140 533
- DE-A1- 19 720 482
- DE-B3- 10 238 585
- US-A- 3 606 592

## Beschreibung

Die vorliegende Erfindung betrifft eine Kammer, insbesondere eine Pumpenkammer, aus zwei Hälften von denen wenigstens eine mit einer Öffnung versehen ist und zwischen denen ein Hohlraum gebildet ist. Des Weiteren umfasst die vorliegende Erfindung ein Verfahren zur Herstellung solch einer Kammer und eine Pumpe, die solch eine Kammer beinhaltet. Die Kammer der vorliegenden Erfindung ist insbesondere zur Verwendung in Mikropumpen geeignet.

Während der Entwicklung wurden Kammern mit dem.obigen Aufbau untersucht, bei denen die Hälften in einem Spritzgussverfahren aus Kunststoff hergestellt werden. Die Verbindung der Hälften erfolgt in diesem Fall durch Verklebung oder Klemmung. Je nach Verwendung solch einer Kammer (z. B. als Pumpenkammer in einer Mikropumpe), können erhebliche dynamische Kräfte auf die Kammerhälften wirken, insbesondere an deren Verbindung. Diese Beanspruchung stellt hohe Anforderungen an die Belastbarkeit des Kunststoffmaterials und erfordert, im Falle einer Klebeverbindung, einen breiten Kleberand.

Die DE-A-197 20 482, welche die Merkmale des Oberbegriffs von Anspruch 10 enthält, offenbart eine Mikromembranpumpe mit einer Pumpmembran, einem auf der Pumpmembran angebrachten Piezoaktuator und einem aus zwei Hälften bestehenden Pumpgehäuse. Im Ruhezustand der Pumpe liegt die Pumpmembran an der oberen Wand des Pumpgehäuses an. Durch Betätigung des Piezoaktuators wird die Pumpmembran weg von dieser Position ausgelenkt und somit eine Pumpkammer zwischen Pumpmembran und Pumpgehäuse gebildet.

Die EP-A-0 025 005 offenbart eine Vorrichtung zum Fördern und Dosieren kleinster Flüssigkeitsmengen bestehend aus einer piezokeramisch beschichteten Membran, die mit ihrem Rand allseitig an eine starre Wand angrenzt, wobei die so gebildete Pumpkammer eine durch entsprechende Mittel verschließbare Durchlassöffnung aufweist. Bei spannungsloser piezokeramischer Beschichtung liegt die Membran flach an der starren Wand an.

Die US 3,606,592, welche den nächstkommenden Stand der Technik für Anspruch 1 darstellt, offenbart ein Verdrängungselement für eine Fluidpumpe, das zwei in einem Membranelement eingebettete Elemente aus einem Formgedächtnismaterial umfasst. Durch Verwendung einer elektrischen Steuerschaltung werden diese Elemente abwechselnd in eine jeweils durch Wärmebehandlung vorbestimmte Form gebracht, wodurch eine periodische Bewegung der Membran erzielt wird, die für einen Pumpvorgang genutzt werden kann.

Die DE-B-102 38 585 offenbart ein Fluidmodul mit einem einstückigen Grundelement, in dem zumindest eine Ausnehmung zur Fluidaufnahme vorgesehen ist, und einem Membranelement, das mit dem Grundelement verbunden ist und an die Ausnehmung in dem Grundelement angrenzt. Zur Verbindung des Grundelements und des Membranelements können insbesondere Klebe- oder Schweißtechniken verwendet werden.

Der vorliegenden Erfindung liegt die Aufgabe zugrunde, eine Kammer mit erhöhter Stabilität, die insbesondere in einer Pumpe als Pumpenkammer Verwendung finden kann, und ein Verfahren zur einfachen und kostengünstigen Herstellung der Kammer zu schaffen.

Diese Aufgabe wird durch eine Kammer mit den Merkmalen des Anspruchs 1, durch eine Pumpe mit den Merkmalen des Anspruchs 17 und durch ein Verfahren mit den Merkmalen des Anspruchs 10 gelöst. Vorteilhafte Ausführungsformen folgen aus den übrigen Ansprüchen.

Die Kammer der Erfindung umfasst eine erste Hälfte und eine zweite Hälfte, wobei die erste und die zweite Hälfte durch eine geschlossene Verbindungsnaht flächig miteinander verbunden sind, und wenigstens eine der beiden Hälften wenigstens eine Öffnung aufweist, die innerhalb der Verbindungsnaht liegt. Wenigstens die zweite Hälfte ist innerhalb der geschlossenen Verbindungsnaht derart thermisch verformt, dass sie relativ zu der Verbindungsfläche mit der ersten Hälfte gewölbt ausgebildet ist, so dass ein Hohlraum zwischen der ersten und der zweiten Hälfte gebildet ist. Die erste und die zweite Hälfte sind hier insbesondere plattenförmig, d. h. ein Körper, dessen seitliche Abmessungen entlang einer Ebene größer sind als seine Ausdehnung in einer Richtung senkrecht zu der Ebene an jedem Punkt der Ebene, wobei diese senkrechte Ausdehnung nicht konstant entlang der Ebene sein muss. Der zwischen den beiden Hälften gebildete Hohlraum kann zur Aufnahme, Speicherung und Abgabe von Flüssigkeiten, Gasen oder mehrphasigen Lösungen benutzt werden, die über die Öffnung aufgenommen und abgegeben werden können. Je nach Verwendung der Kammer (z. B. als Filter, Speicher oder zur Erzeugung von Aerosolen) können Filterelemente (z. B. in Pulver- oder Membranform) oder Speicherelemente (z. B. Schwämme) in dem Hohlraum enthalten sein. Des Weiteren kann der Hohlraum als Resonanz- oder Schutzraum für ein darin untergebrachtes Sensorelement dienen (z. B. zur Messung von Druckschwankungen). Die Wölbung der zweiten Hälfte wird durch thermisches Verformen erreicht, also durch gezieltes Aufbringen von Wärme. Hierbei kann die gewünschte Verformung durch den Verbindungsvorgang oder zusätzlich durch einen separat nach der Verbindung der beiden Hälften durchgeführten Verformungsschritt erfolgen. Da diese Technik auch auf Materialien mit einem hohen Härtegrad, wie z. B. Metalle, angewandt werden kann, ist es möglich die zweite Hälfte aus einem harten Material auszubilden und somit eine erhöhte Stabilität und Steifigkeit der Kammer zu gewährleisten. Dies ist besonders wichtig, wenn die Kammer als Pumpenkammer, z. B. in einer Mikropumpe, verwendet wird, da in diesem Fall beträchtliche dynamische Kräfte auf die erste Kammerhälfte wirken. Je nach Verwendung der Kammer kann die erste Hälfte flach, also ohne wesentliche Erhöhungen oder Vertiefungen (z. B. bei Verwendung als Pumpenkammer), oder innerhalb der geschlossenen Verbindungsnaht relativ zu der Verbindungsfläche mit der zweiten Hälfte gewölbt ausgebildet werden (z. B. bei Verwendung als Behälter oder Filter), womit das Volumen des Hohlraums vergrößert wird. Diese Wölbung kann z. B. durch thermisches Verformen (wie im Fall der zweiten Hälfte) oder durch Tiefziehen erreicht werden.

In einer bevorzugten Ausführungsform der vorliegenden Erfindung ist die Verbindungsnaht der ersten und zweiten Kammerhälfte eine Schweißnaht, vorzugsweise eine Laserschweißnaht. Dies ermöglicht eine stabile Verbindung der beiden Hälften und eine zuverlässige Dichtigkeit des zwischen ihnen gebildeten Hohlraums. Somit sind keine zusätzlichen Dichtungsmaterialien notwendig, was die Produktion der Kammer erleichtert. Durch die während des Schweißvorgangs gezielt auf die beiden Kammerhälften aufgebrachte Wärme wird außerdem eine Wölbung der beiden Hälften erzielt. Da hierbei der Grad der thermischen Verformung maßgeblich von der radialen Schrumpfbarkeit und somit der Flexibilität der Kammerhälften abhängt, kann die Wölbung durch die Härte oder Stärke des gewählten Materials kontrolliert werden. Materialhärte und/oder -stärke können für die beiden Kammerhälften unterschiedlich gewählt werden, z. B. so, dass sich die zweite Hälfte erheblich mehr als die erste verformt. Je nach Volumen und Form des gewünschten Hohlraums ist somit unter Umständen kein weiterer separater Verformungsschritt notwendig, was die Herstellung der Kammer vereinfacht. Des Weiteren wird ein Verlaufen des Klebers, z. B. in den Hohlraum, wie es bei Klebeverbindungen vorkommen kann, und somit eine Kontamination der Kammer verhindert. Besonders Laserverschweißen ermöglicht eine punktuell exakte Führung der Schweißnaht, auch bei komplexen Nahtkonturen. Des Weiteren erlaubt diese Technik eine geringe Schweißnahtbreite, und somit ein maximales Hohlraumvolumen bei gegebenem Außendurchmesser bzw. -umfang der geschlossenen Naht, und lässt das geschweißte Material auf seiner Innenseite unverändert, so dass mögliche chemische Reaktionen, wie z. B. Oxidation, vermieden werden. Zusätzlich kann der Verbindungsprozess der zwei Kammerhälften leicht automatisiert werden, was eine schnellere und effizientere Produktion ermöglicht.

Des Weiteren weist die zweite Hälfte wenigstens eine Verformungsnaht auf, die innerhalb der Verbindungsnaht liegt und geschlossen oder offen ausgebildet sein kann. Dadurch wird eine gleichmäßige Verformung der zweiten Kammerhälfte und somit eine präzise Kontrolle des Hohlraumvolumens gewährleistet. Die Verformungsnaht führt nur zu einer Materialentartung (jedoch nicht zu einer Materialverschlechterung) der zweiten Hälfte, nicht aber zu einer Verbindung mit der ersten Hälfte. Während eine einzelne Verformungsnaht für die Ausbildung einer kontrollierten Wölbung der zweiten Hälfte normalerweise ausreichend ist, können auch mehrere Verformungsnähte gebildet werden, z. B., wenn ein komplexeres Wölbungsprofil erwünscht ist, abhängig von dem Verwendungszweck der Kammer.

In einer Ausführungsform der Erfindung weist die Kammer wenigstens eine geschlossen ausgebildete Verformungsnaht auf.

In einer weiteren Ausführungsform der Erfindung weist die Kammer wenigstens eine offen ausgebildete Verformungsnaht auf. Die Verformungsnaht kann hierbei z. B. umfänglich oder radial angeordnet sein.

Des Weiteren ist eine Kombination von mehreren Verformungsnähten möglich, wobei z. B. einige der Verformungsnähte geschlossen und einige offen ausgebildet sein können. Dabei können die Verformungsnähte geradlinig, gekrümmt oder beides sein.

Vorzugsweise ist die wenigstens eine Verformungsnaht eine Laserumformungsnaht. Durch Laserumformen kann Wärme lokal, an exakt definierten Stellen der zweiten Kammerhälfte aufgebracht werden, was eine präzise Regulierung der Materialverformung und somit eine genaue Kontrolle des Hohlraumvolumens ermöglicht. Nach Beendigung des Verformungsprozesses kann das Hohlraumvolumen gemessen werden und, falls nötig, können Verformungskorrekturen durch weiteres Laserumformen vorgenommen werden, bis das gewünschte Volumen erreicht wird. Diese Technik ist auch auf gehärtete Metalle, wie z. B. gehärtetes Federblech, anwendbar und gestattet somit eine Maximierung der Stabilität der Kammer.

Die erste und die zweite Kammerhälfte weisen eine Dicke senkrecht zu ihrer Fläche auf, wobei vorzugsweise die Dicke der ersten Hälfte geringer als die der zweiten Hälfte ist. Dieser Aufbau ist besonders vorteilhaft, wenn die Kammer als Pumpenkammer, z. B. in einer Mikropumpe, eingesetzt wird. In diesem Fall kann die Dicke der zweiten Hälfte groß genug gewählt werden, um eine ausreichende Stabilität gegenüber den auftretenden dynamischen Kräften zu gewährleisten. Die Dicke der ersten Hälfte kann geringer gewählt werden, um eine erhöhte Biegsamkeit zu erzielen (bei ausreichender Stabilität) und somit vorzugsweise eine elastische Auslenkung der ersten Hälfte, relativ zu der zweiten Hälfte, in Richtung senkrecht zu ihrer Fläche zu ermöglichen (durch Einwirken einer äußeren Kraft). Durch solch eine Auslenkung kann das Volumen des zwischen erster und zweiter Kammerhälfte gebildeten Hohlraums je nach Auslenkungsrichtung der ersten Hälfte vergrößert oder verkleinert werden, wodurch in der Kammer entsprechend ein Unter- oder Überdruck erzeugt wird. Auf diese Weise können Flüssigkeiten, Gase oder mehrphasige Lösungen in die Kammer aufgenommen und wieder aus ihr abgegeben werden, d. h. durch Verwendung der ersten Hälfte als Pumpmembran kann die Kammer als Pumpelement eingesetzt werden. Die Auslenkung erfolgt hierbei elastisch, d. h. die erste Kammerhälfte kehrt, wenn keine äußere Kraft mehr auf sie einwirkt, in ihre Ausgangsposition zurück. Es ist somit möglich, die äußere Kraft zur Auslenkung der ersten Hälfte nur in einer Richtung auszuüben und für eine Auslenkbewegung in die entgegengesetzte Richtung die Rückstellkraft der ersten Hälfte zu nutzen. Z. B. könnte der Hohlraum durch Drücken der ersten Hälfte in Richtung auf die zweite Hälfte komprimiert werden und würde nach Wegfall der von außen einwirkenden Kraft selbständig wieder expandieren, bis er sein ursprüngliches Volumen erreicht hat. Solch eine Konfiguration ermöglicht einen vereinfachten Aufbau der Pumpe und erleichtert deren Herstellung. Bei Verwendung der Kammer als Speicher, z. B. als Flüssigkeitsspeicher, kann zudem ein in dem Hohlraum enthaltenes Speicherelement (wie z. B. ein Schwamm) durch eine kontrollierte Auslenkung der ersten Kammerhälfte komprimiert werden, so dass ein Teil des in der Kammer gespeicherten Fluids (oder das gesamte gespeicherte Fluid) über die Öffnung der Kammer nach außen abgegeben wird.

In einer weiteren bevorzugten Ausführungsform ist die Wölbung der zweiten Hälfte an die maximale Auslenkung der ersten Hälfte angepasst. Somit wird ein hohes Kompressionsverhältnis erreicht, was hohe Förderraten, verbesserte Gegendruckfähigkeiten und eine erhöhte Toleranz gegenüber Gasblasen ermöglicht. Da die maximale Auslenkung der ersten Hälfte relativ gering ist (typischerweise einige hundert µm) setzt solch eine Anpassung ein exaktes und kontrolliertes Verformen der zweiten Kammerhälfte voraus, was durch die vorliegende Erfindung ermöglicht wird.

Vorzugsweise ist die erste Hälfte mit einem piezoelektrischen Element verbunden, mit dem die Auslenkung der ersten Hälfte gesteuert werden kann. Auf diese Weise kann die Auslenkung einfach durch Anlegen einer vorgegebenen Spannung an das piezoelektrische Element verändert werden. Das piezoelektrische Element kann hierbei bipolar eingesetzt werden, d. h. durch Anlegen einer positiven oder negativen Spannung wird die erste Hälfte in jeweils eine von zwei entgegengesetzten Richtungen ausgelenkt, oder unipolar verwendet werden, d. h. es wird ausschließlich entweder eine positive oder eine negative Spannung angelegt, so dass die erste Hälfte durch das piezoelektrische Element in eine bestimmte Richtung ausgelenkt wird, und die Auslenkung in der entgegengesetzten Richtung erfolgt durch die Rückstellkraft der ersten Hälfte. Während die letztere Konfiguration einen einfacheren Aufbau der Pumpe ermöglicht, kann in der ersteren Konfiguration das Hubvolumen der Pumpe vergrößert werden. Der Pumpenaufbau kann also je nach Einsatzgebiet der Pumpe modifiziert werden.

In einer weiteren bevorzugten Ausführungsform besteht die erste Hälfte und/oder die zweite Hälfte aus Metall, vorzugsweise aus Stahl. Solch ein Aufbau ermöglicht eine stabile Konstruktion der Kammer, was besonders bei Einsatz der Kammer als Pumpenkammer, z. B. in einer Mikropumpe, vorteilhaft ist. In diesem Fall ist nicht nur, wie bereits weiter oben beschrieben, eine hohe Stabilität der zweiten, sondern auch der ersten Kammerhälfte wichtig. Bei Benutzung der Kammer als Pumpenkammer wird die erste Hälfte durchgehend durch Auslenkung elastisch verformt, was zu Abnutzungserscheinungen und folglich zu einer Verschlechterung der elastischen Eigenschaften oder sogar zu Beschädigungen, wie z. B. Brüchen, führen kann. Durch Verwendung von Metallen, insbesondere Stahl, als Material für die erste Kammerhälfte kann somit eine verlängerte Lebensdauer der Pumpe gewährleistet werden. Des Weiteren hat besonders Stahl den Vorteil, dass er biokompatibel und toxikologisch unbedenklich ist, so dass eine Kontamination der in der Kammer befindlichen Flüssigkeit (oder des Gases oder der Lösung) ausgeschlossen werden kann. Stahl ist ein in der Industrie weit verbreitetes und verarbeitungstechnisch eingehend untersuchtes Material, das preisgünstig ist und sich mit konventionellen Techniken effektiv bearbeiten lässt. Insbesondere weist Stahl eine glatte Oberfläche auf, was die Herstellung der Kammer erleichtert.

Wird die Kammer als Pumpenkammer eingesetzt, so ist vorzugsweise ein Ventil in Fluidverbindung mit der Öffnung der zweiten Hälfte angeordnet. Hierbei kann sich das Ventil in oder an der Öffnung befinden oder über eine Leitung (z. B. einen Schlauch) mit dieser verbunden sein. Somit kann der Zu- und Abfluss von Flüssigkeiten, Gasen oder Lösungen in die Kammer bzw. aus der Kammer heraus genau kontrolliert werden. Das Ventil kann hierbei z. B. als Einfachventil, Doppelventil (insbesondere bei Verwendung der Kammer als Pumpenkammer) oder Dreiwegeventil ausgelegt sein.

Die Erfindung umfasst ferner auch eine Pumpe, die eine wie oben beschrieben aufgebaute Kammer aufweist. Viele der Vorteile, die solch eine Kammer bei Einsatz als Pumpenkammer bietet, wurden bereits weiter oben im Detail beschrieben. Insbesondere erlaubt die bei der vorliegenden Kammer mögliche exakte Kontrolle des Hohlraumvolumens die zuverlässige Konstruktion von Kammern mit kleinen Volumen bis hinunter zu einigen µl. Die gemäß der Erfindung aufgebaute Kammer ist somit also ideal als Pumpenkammer für Mikropumpen geeignet. Dabei kann die die Pumpenkammer bildende geschlossene Verbindungsnaht auch derart konturiert sein, dass mehrere (z.B. drei) über Kanäle verbundene Kammersegmente gebildet sind.

Vorzugsweise umfasst die Pumpe mehrere der wie oben beschrieben aufgebauten Kammern, wobei zumindest zwei der Kammern in Fluidverbindung miteinander stehen. Die Kammern können hierbei in Serie oder parallel miteinander verbunden werden, um eine Erhöhung des Hubvolumens und/oder der Gegendruckfähigkeit zu erreichen. In diesem Fall können die verschiedenen Kammern jeweils ein oder mehrere Ventile sowie jeweils ein piezoelektrisches Element enthalten. Bei Betrieb der Pumpe kann eine Steuerung der Ventile und der Piezoelemente miteinander abgeglichen werden, z. B. durch eine elektrische Schaltung, um so einen optimalen Ablauf des Pumpvorgangs zu gewährleisten.

Weitere (mikrofluidische) Komponenten, wie z. B. Schläuche, Röhren usw., können durch Kleben oder Klemmung und Dichtung an der Pumpe oder direkt an der Kammer angebracht werden. Die Aufgabe der Erfindung wird, wie erwähnt, auch durch ein Verfahren zur Herstellung einer Kammer gelöst, das die folgenden Schritte umfasst: Herstellung einer plattenförmigen ersten Hälfte und einer plattenförmigen zweiten Hälfte, flächiges Verbinden der ersten und der zweiten Hälfte miteinander durch eine geschlossene Verbindungsnaht, und Verformen der mit der ersten Hälfte verbundenen zweiten Hälfte, um einen Hohlraum zwischen erster und zweiter Hälfte auszubilden. Die plattenförmigen Hälften können hierbei z. B. durch Stanzen, Ätzen oder Schneiden aus einem Metallblech hergestellt werden. Da die Verformung mit oder nach der Verbindung der beiden Hälften miteinander erfolgt, können die beiden Hälften bei dem Verbindungsprozess im Wesentlichen flach aneinander gelegt werden. Dies vereinfacht den Verbindungsvorgang und erleichtert somit die Herstellung der Kammer.

Das Verfahren kann ferner einen Schritt umfassen, in dem wenigstens eine der beiden Hälften mit einer Öffnung versehen wird, wobei die Verbindungsnaht später die Öffnung umgibt. Der Schritt zur Ausbildung der Öffnung erfolgt hierbei vor der Verbindung der beiden Kammerhälften miteinander.

In einer bevorzugten Ausführungsform erfolgt das Verbinden der ersten und der zweiten Hälfte miteinander durch Verschweißen, vorzugsweise durch Laserverschweißen.

In einer weiteren bevorzugten Ausführungsform erfolgt die Verformung der zweiten Hälfte durch thermisches Verformen, vorzugsweise durch Laserstrahlumformen. Insbesondere ermöglicht es Laserstrahlumformen, Wärme lokal, an exakt definierten Stellen der zweiten Kammerhälfte aufzubringen, was es ermöglicht, den Verformungsschritt einfach und effektiv nach dem Verbindungsschritt der beiden Hälften miteinander durchzuführen. Durch abwechselndes Laserstrahlumformen und Messen des Volumens des zwischen den beiden Hälften gebildeten Hohlraums, kann der Verformungsprozess solange durchgeführt werden, bis das gewünschte Hohlraumvolumen erreicht ist.

In einer weiteren bevorzugten Ausführungsform besteht die erste Kammerhälfte und/oder die zweite Kammerhälfte aus Metall, vorzugsweise aus Stahl.

Vorzugsweise sind die beiden Kammerhälften jeweils über Stege in einen Rahmen eingepasst bzw. integriert. Die Rahmen (z. B. Stanzrahmen), die in Form von "Endlosbändern" vorliegen können, ermöglichen eine exakte Positionierung der Kammerhälften zueinander und erleichtern deren Zuführung zu Bearbeitungsprozessen, wie z. B. dem Verbindungsprozess oder dem Verformungsprozess. Die Stege werden vorzugsweise flexibel gewählt, so dass einerseits die Rahmen nicht durch die bei der Bearbeitung entstehenden Verformungen der Kammerhälften beeinflusst werden und im Wesentlichen ihre ursprüngliche Form beibehalten. Andererseits wird somit erreicht, dass die Verformung der Kammerhälften durch die flexiblen Stege von den Rahmen "entkoppelt" wird, wodurch eine ungehinderte Verformung der Hälften ohne Beeinträchtigung durch die Rahmen ermöglicht wird. Die Kammern können in einem nachfolgenden Schritt aus dem Rahmen gelöst werden, in dem die Stege durchtrennt werden.

Nachfolgend wird die vorliegende Erfindung rein beispielhaft anhand der beigefügten Figuren beschrieben, wobei
Fig. 1 eine perspektivische Ansicht mehrerer zweiter Kammerhälften gemäß einer bevorzugten Ausführungsform zeigt;
Fig. 2 eine perspektivische Ansicht mehrerer erster Kammerhälften gemäß derselben bevorzugten Ausführungsform zeigt;
Fig. 3 eine perspektivische Ansicht der ersten und zweiten Kammerhälften während eines Positionierungsschritts vor dem Verbindungsschritt gemäß derselben bevorzugten Ausführungsform zeigt;
Fig. 4A eine Querschnittsansicht einer mit einer zweiten Kammerhälfte zueinander gefügten ersten Kammerhälfte vor dem Verbindungsschritt gemäß derselben bevorzugten Ausführungsform zeigt;
Fig. 4B eine Querschnittsansicht der in Fig. 4A gezeigten Kammerhälften nach erfolgter Verbindung der Kammerhälften zeigt;
Fig. 5 eine Querschnittsansicht der in Fig. 4B gezeigten Kammerhälften nach erfolgter zusätzlicher thermischer Verformung der zweiten Kammerhälfte durch Verformungsnähte zeigt;
Fig. 6a und b Draufsichten von in Stanzrahmen enthaltenen Kammern unterschiedlicher Ausführungsformen zeigen;
Fig. 7a bis d Querschnittsansichten einer Mikropumpe gemäß einer ersten Ausführungsform in verschiedenen Phasen des Pumpvorgangs zeigen;
Fig. 8 eine Unteransicht einer erfindungsgemäßen dreiteiligen Kammer (oben) und eine Querschnittsansicht einer Mikropumpe gemäß einer zweiten Ausführungsform, welche die dreiteilige Kammer als Pumpenkammer nutzt (unten), zeigt;
Fig. 9a und b prinzipielle Skizzen zeigen, um die Funktion einer oszillierenden Membran zur Erzeugung von Aerosolen zu erläutern; und
Fig. 10a und b Querschnittsansichten von Kammern unterschiedlicher Ausführungsformen zur Erzeugung von Aerosolen zeigen.

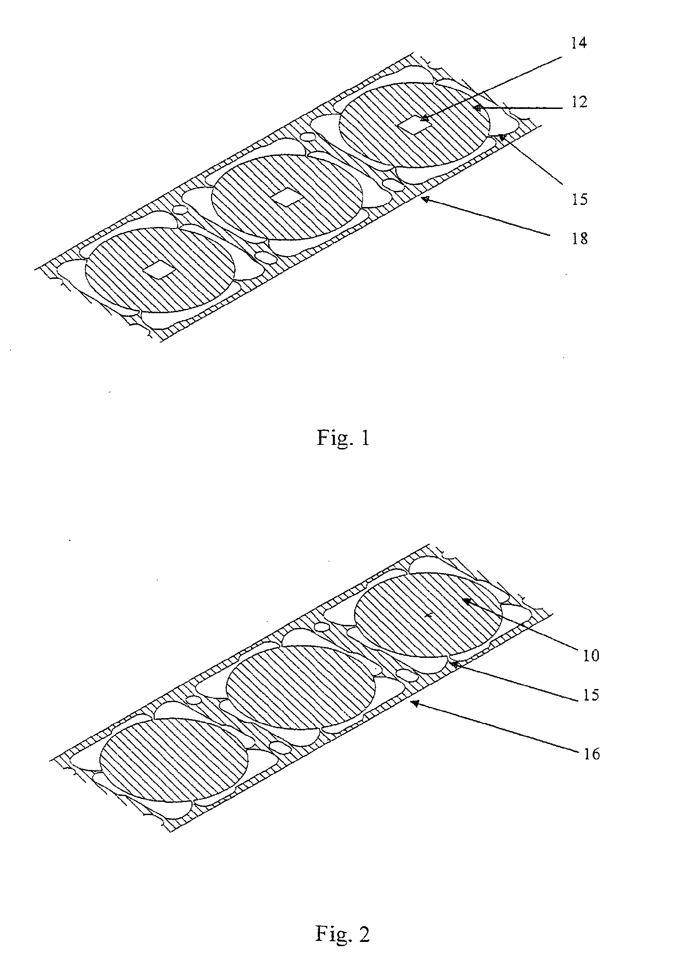

Fig. 1 zeigt eine perspektivische Ansicht mehrerer erfindungsgemäßer zweiter Kammerhälften 12 mit Öffnungen 14 (Zwischenprodukt) nach einer bevorzugten Ausführungsform, die durch Ausstanzen aus einem Edelstahlblech hergestellt wurden und über schmale Stege 15 mit dem Stanzrahmen 16 verbunden sind. Die Hälften 12 sind flächig und rund ausgebildet und weisen eine Dicke von 0,3 mm sowie einen äußeren Durchmesser von 30 mm auf. Die Öffnung 14 ist quadratisch ausgebildet mit einer Seitenlänge von 6 mm. In weiteren bevorzugten Ausführungsformen liegen die Dicke und der Durchmesser der zweiten Hälfte 12 typischerweise in einem Bereich von 0,2-0,6 mm bzw. 10-50 mm. Die Form der Öffnung 14 kann beliebig gewählt und z. B. an die Form eines einzupassenden Ventils angepasst werden. Z. B. kann die Öffnung 14 rechteckig, dreieckig, oval oder kreisförmig ausgebildet sein, mit Durchmessern typischerweise im Bereich von 1-15 mm.

Fig. 2 zeigt eine perspektivische Ansicht mehrerer erster Kammerhälften 10 (Zwischenprodukt) gemäß derselben bevorzugten Ausführungsform wie in Fig. 1 gezeigt. Die ersten Hälften 10 wurden ebenfalls durch Ausstanzen aus einem Edelstahlblech hergestellt, sind über schmale Stege 15 mit dem Stanzrahmen 18 verbunden und sind wie die zweiten Hälften 12 flächig und rund ausgebildet mit einer Dicke von 0,1 mm (typischer Bereich 0,05-2 mm) und einem Durchmesser von 30 mm (typischer Bereich 10-50 mm). Während die erste 10 und die zweite Hälfte 12 in der vorliegenden Ausführungsform identische Durchmesser haben, können in weiteren bevorzugten Ausführungsformen die Durchmesser der zwei Hälften 10, 12 auch unterschiedlich voneinander gewählt werden. Z. B. kann der Durchmesser der ersten Hälfte 10 größer als der der zweiten Hälfte 12 sein. Wie in Fig. 1 und 2 gezeigt, werden in der vorliegenden Ausführungsform die ersten 10 und zweiten

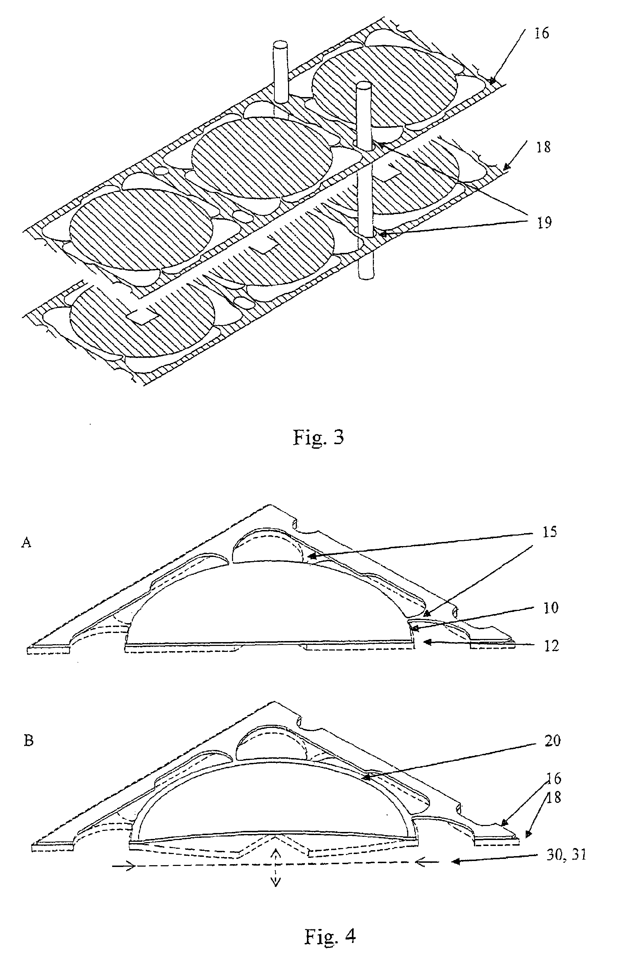

Kammerhälften 12 über Stege 15 in Stanzrahmen 18 bzw. 16 gehalten, was die Verbindung der beiden Hälften 10, 12 erleichtert. Für diesen Prozessschritt werden einfach die beiden Stanzrahmen 16, 18 deckungsgenau übereinander gelegt, wodurch auch mindestens jeweils eine in Rahmen 16 enthaltene erste Hälfte 10 und eine in Rahmen 18 enthaltene zweite Hälfte 12 deckungsgenau übereinander liegen. Wie in Fig. 3 gezeigt, kann die Positionierung der Kammerhälften 10, 12 zueinander hierbei durch in den Rahmen 16, 18 vorgesehene Indexlöcher 19 erfolgen. In einer weiteren Ausführungsform der Erfindung können die Stanzrahmen 16, 18 auch als Endlosbänder ausgeführt werden, was die Automatisierung der Bearbeitungsprozesse erleichtert.

Fig. 4A zeigt eine Querschnittsansicht einer deckungsgleich über eine zweite Kammerhälfte 12 gelegten ersten Kammerhälfte 10 vor dem Verbindungsschritt. Als Nächstes werden die beiden übereinander liegenden Hälften 10, 12 von der Seite der ersten Hälfte 10 aus miteinander laserverschweißt. In weiteren bevorzugten Ausführungsformen kann dieser Verbindungsschritt auch von der Seite der zweiten Hälfte aus erfolgen. Da die verbundenen Hälften 10, 12 erst nach dem Verformungsschritt der zweiten Hälfte 12, also wenn der Kammerformungsprozess abgeschlossen ist, aus den Rahmen 16, 18 entfernt werden, wird eine Automatisierung des Herstellungsprozesses erleichtert.

Fig. 4B zeigt eine Querschnittsansicht der durch Laserverschweißen miteinander verbundenen in Fig. 4A gezeigten ersten 10 und zweiten Kammerhälfte 12 (Zwischenprodukt). Für das Laserverschweißen wurde ein CW-Faserlaser mit einer Wellenlänge von 1064 nm (typischer Bereich 800-1200 nm), einer Leistung von 100 W (typischer Bereich 50-200 W) und einem fokussierten Laserspot-Durchmesser von 30 µm (typischer Bereich 20-40 µm) verwendet, wobei auch andere Laser für Metallbearbeitung geeignet sind. Die laterale Strahlgeschwindigkeit während des Verschweißungsprozesses betrug 300 mm/sec (typischer Bereich 200-600 mm/sec).

Die Laserschweißnaht 20 ist kreisförmig ausgebildet und hat einen Durchmesser von 28 mm (typischer Bereich 10-50 mm, abhängig von den Abmessungen der zwei Kammerhälften 10, 12). Wie aus Fig. 4B ersichtlich, kommt es bereits bei dem Verschweißungsprozess zu einer ersten Verformung (und somit Wölbung) der beiden Kammerhälften 10, 12. Dadurch entsteht ein Hohlraum 30 zwischen den kreisrunden Kammerhälften 10, 12. Die Wölbung der Kammerhälften 10, 12 ist gleichzeitig mit einer geringfügigen Verkürzung 31 der Hälften 10, 12 in radialer Richtung (Schrumpfen) verbunden. Da die Stege 15 schmal und flexibel ausgebildet sind, haben die Verformungen der Kammerhälften 10, 12 keinen Einfluss auf die Stanzrahmen 16, 18, so dass diese ihre ursprüngliche Form beibehalten. Die Stege dienen mit anderen Worten also als Aufhängung für die Kammerhälften in den Stanzrahmen 16,18. Andererseits wird durch die "Entkopplung" der Verformung der Kammerhälften 10, 12 von den Rahmen 16, 18 durch die schmalen und flexiblen Stege 15 ermöglicht, dass die Hälften 10, 12 zuverlässig und ohne Beeinträchtigung durch die Rahmen 16, 18 verformt werden können. Andernfalls könnten sich die Rahmen bei der Verformung der Hälften mit verformen und dadurch versteifen.

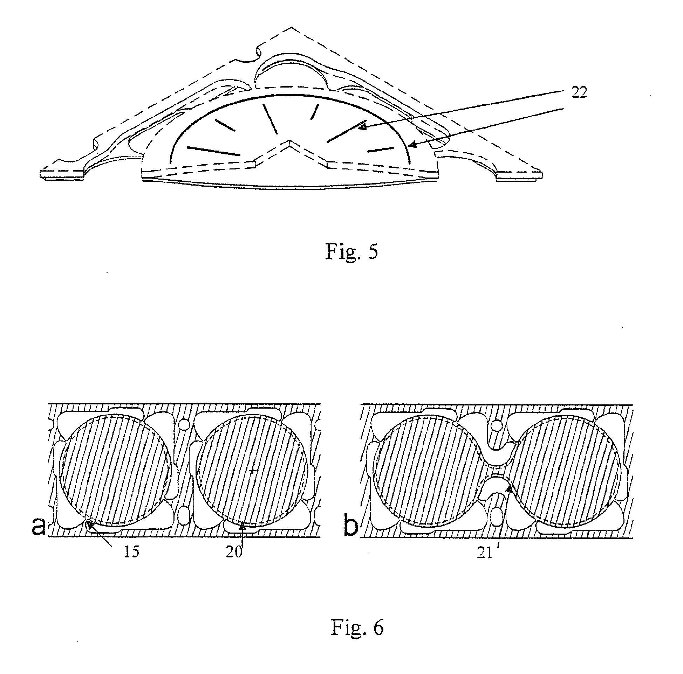

Nach erfolgter Laserverschweißung der beiden Hälften 10, 12 wird die zweite Hälfte 12 durch Laserstrahlumformen verformt. Dadurch kann eine weitere und zum Teil größere Wölbung der zweiten Hälfte 12 erzielt werden. Fig. 5 zeigt eine Querschnittsansicht der miteinander verbundenen ersten 10 und zweiten Kammerhälften 12 nach Verformung der zweiten Kammerhälfte 12 gemäß der vorliegenden Ausführungsform. Für diesen Verformungsschritt, der von der Seite der zweiten Hälfte 12 aus erfolgte, wurde der gleiche Laser wie für den Verschweißungsschritt mit der oben beschriebenen Konfiguration verwendet (in weiteren Ausführungsformen können die Parameter des Lasers in den oben beschriebenen Bereichen variieren). Das Laserstrahlumformen wurde bei einer lateralen Strahlgeschwindigkeit von 600 mm/sec (typischer Bereich 100 - 800 mm/sec) und mit einem fokussierten Laserspot mit einem Durchmesser von 50 µm (typischer Bereich 40-80 µm) durchgeführt. Für weitere Information zu der Technik des Laserstrahlumformens wird auf das Dokument "Flexible Formgebung von Blechen durch Laserstrahlumformen", Dissertation von Thomas Hennige, Erlangen, 2001, ISBN 3-87525-140-7, verwiesen. Wie aus Fig. 5 ersichtlich weist die zweite Kammerhälfte 12 eine geschlossene kreisförmige Verformungsnaht 22 und mehrere offene, radial angeordnete und geradlinig verlaufende Verformungsnähte 22 unterschiedlicher Länge auf. In weiteren Ausführungsformen kann eine beliebige Anzahl von Verformungsnähten 22 mit beliebigen Formen (z. B. oval oder wie die in Fig. 6 b gezeigte Verbindungsnaht 21) gewählt werden, wobei eine Wölbung der zweiten Kammerhälfte 12 auch durch eine einzelne Naht 22 erzielt werden kann. Die Durchmesser (oder generell lateralen Abmessungen) geschlossener Verformungsnähte 22 liegen typischerweise im Bereich 15-50 mm, unter anderem abhängig von den Abmessungen der Kammerhälften 10, 12. In der vorliegenden, in Fig. 5 gezeigten Ausführungsform wird durch das Laserstrahlumformen eine Wölbung der zweiten Kammerhälfte 12 mit einer maximalen Durchbiegung von ca. 400 µm (typischer Bereich 100-500 µm) erreicht, wodurch ein Hohlraum zwischen den beiden Kammerhälften 10, 12 mit einem Volumen von ca. 30 µl gebildet wird (typischer Bereich 5-100 µl). Nach dem Laserstrahlumformungsschritt ist der Herstellungsprozess der Kammer abgeschlossen und die fertige Kammer kann aus den Stanzrahmen 16, 18 herausgenommen (Durchtrennen der Stege) oder an weitere Montageprozesse herangeführt werden. Fig. 6a und b zeigen Draufsichten von in Stanzrahmen 16, 18 integrierten Kammern unterschiedlicher Ausführungsformen, wobei die in Fig. 6a dargestellte Konfiguration der in den Fig. 4B und 5 gezeigten entspricht. Die in Fig. 6b gezeigte Ausführungsform, bei der die beiden Kammern über eine schmale Verbindung miteinander in Fluidverbindung stehen, ist insbesondere für die Verwendung in Pumpen, vorzugsweise in Mikropumpen, vorteilhaft. Auch andere Kammergeometrien sind denkbar.

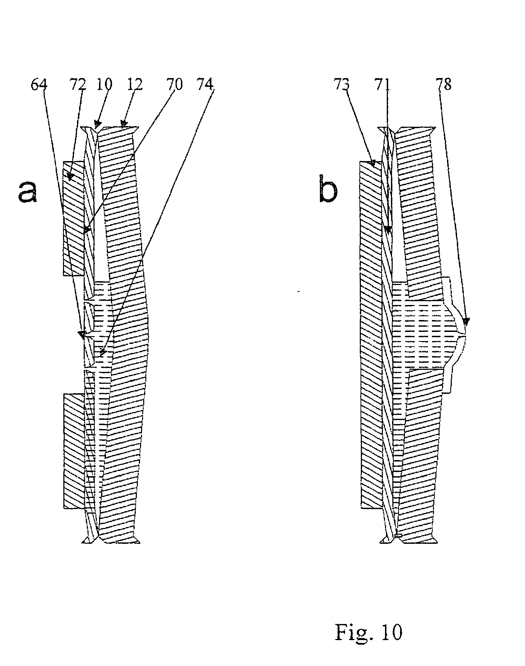

Zur Verwendung der Kammer als Pumpenkammer, z. B. in einer Mikropumpe, kann die Kammer mit einem nicht gezeigten Ventil versehen werden, das in Fluidverbindung mit der Öffnung 14 ist. Das Ventil kann z. B. in oder an der Öffnung 14 angebracht, oder über eine Leitung (z. B. Schlauch) mit dieser verbunden werden. Das verwendete Ventil kann hierbei ein Rückschlagventil, z. B. aus Si, Metall oder Kunststoff sein. Das Ventil kann in oder an der Öffnung 14 z. B. durch Verkleben oder Klemmen und Abdichten befestigt werden. Andererseits ist es auch möglich, die Kammer ohne Einbau eines zusätzlichen Ventils als Pumpenkammer zu benutzen, z. B. zur Erzeugung eines oszillierenden Drucks. Des Weiteren kann, bei Verwendung der Kammer als Pumpenkammer, ein piezoelektrisches Element an der äußeren Oberfläche der ersten Hälfte 10 der Kammer angebracht werden. Das Piezoelement kann hierbei in unterschiedlichen Formen ausgebildet sein, z. B. als Scheibe oder Ring, und auf unterschiedliche Weise mit der Kammer verbunden werden, z. B. durch Verkleben. Eine Ausbildung des Piezoelements als Ring ist insbesondere dann vorteilhaft, wenn beide Kammerhälften 10, 12 mit Öffnungen 14 versehen sind, z. B. bei Verwendung der Kammer als Filter, oder generell, wenn eine Öffnung 14 auf der mit dem Piezoelement versehenen Hälfte 10, 12 vorgesehen ist, z. B. bei Verwendung der Kammer zur Erzeugung von Aerosolen (siehe Fig. 10a). In diesem Fall kann der Piezoring um eine der Öffnungen 14 herum angeordnet werden, so dass eine ungehinderte Flüssigkeitsaufnahme oder -abgabe durch die betreffende Öffnung 14 möglich ist. Des Weiteren kann die Anordnung des Piezoelements relativ zu der Schweißnaht 20 unterschiedlich gewählt werden, z. B. kann die Schweißnaht 20 innerhalb eines Piezorings liegen, je nach Konfiguration der Kammer.

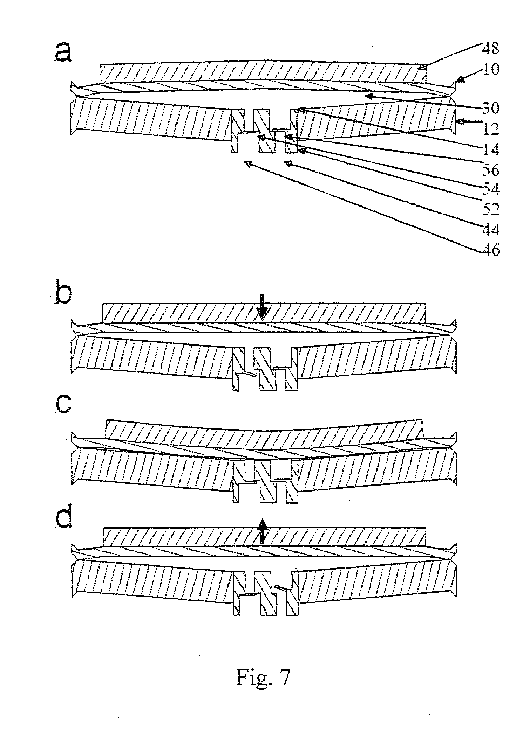

Fig. 7a zeigt eine Querschnittsansicht einer Mikropumpe gemäß einer ersten Ausführungsform der Erfindung. Die Mikropumpe umfasst eine aus Stahlblech bestehende Pumpenkammer mit einer ersten Kammerhälfte 10 und einer zweiten Kammerhälfte 12 der in den Fig. 1 bis 6 a gezeigten Ausführungsform. Die Dicken (Stärken) der Kammerhälften 10, 12 , sowie auch die Abmessungen der anderen Komponenten sind in Fig.7. außer Proportion gezeigt. An der äußeren Oberfläche der ersten Kammerhälfte 10 ist ein scheibenförmiges piezoelektrisches Element 48 angeordnet, das über eine nicht gezeigte elektrische Verbindung mit einer Spannungsquelle verbunden ist und in der vorliegenden Ausführungsform bipolar eingesetzt wird. In der Öffnung 14 der zweiten Kammerhälfte 12 ist ein Doppelventil 52 vorgesehen, das ein erstes 56 und ein zweites Blattelement 54 beinhaltet. Diese zwei Blattelemente sind so angeordnet, da sie als Rückschlagventile in jeweils dem Einlass- 44 bzw. dem Auslasskanal 46 fungieren. Wenn die beiden Blattelemente 54, 56 in ihrer Ausgangsstellung sind, ist das Ventil geschlossen. Das erste Blattelement 56 ist nur in Richtung auf die Öffnung 14 der Kammer elastisch auslenkbar (wobei durch die Auslenkung ein Flüssigkeitsdurchlass zwischen dem Einlasskanal 44 und der Kammeröffnung 14 gebildet wird) und das zweite Blattelement 54 ist nur in die entgegengesetzte Richtung elastisch auslenkbar (wobei durch die Auslenkung ein Flüssigkeitsdurchlass zwischen der Kammeröffnung 14 und dem Auslasskanal 46 gebildet wird). Somit kann eine Flüssigkeit (oder ein Gas, eine Lösung) nur durch den Einlasskanal 44 in die Kammer hinein- und nur über den Auslasskanal 46 aus dieser herausströmen. In der in Fig. 7a gezeigten Konfiguration ist eine Spannung einer bestimmten Polung an das Piezoelement 48 angelegt und das Doppelventil 52 ist geschlossen.

Bei weiterem Betrieb der Mikropumpe wird durch die nicht gezeigte Spannungsquelle die Spannung an das Piezoelement 48 umgepolt, wodurch die erste Kammerhälfte 10 in Richtung auf die zweite Kammerhälfte 12 ausgelenkt wird (siehe Fig. 7b). Dadurch wird das Volumen des zwischen den beiden Kammerhälften 10, 12 ausgebildeten Hohlraums 30 verringert und es entsteht ein Überdruck in der Pumpenkammer. Dieser Überdruck bewirkt, dass das zweite Blattelement 54 in Richtung auf die Auslassöffnung 46 ausgelenkt wird und die in der Kammer enthaltene Flüssigkeit (oder das Gas, die Lösung) durch die Auslassöffnung 46 aus dem Hohlraum 30 heraus transportiert wird. Wenn, wie in Fig. 7c gezeigt, die erste Kammerhälfte 10 voll ausgelenkt ist, ist kein Fluid mehr in der Kammer enthalten. Der durch die erste Hälfte 10 ausgeübte Druck sinkt auf 0 ab und das zweite Blattelement 54 kehrt in seine Ausgangsposition zurück, so dass das Doppelventil 52 geschlossen wird. Wird nun die Polung der an das Piezoelement 48 angelegten Spannung wieder umgekehrt, so geht die erste Kammerhälfte 10 in ihre Ausgangsstellung zurück, wie in Fig. 7d gezeigt, wodurch sich das Volumen des Hohlraums 30 vergrößert und ein Unterdruck in der Kammer entsteht. Durch diesen Unterdruck wird das erste Blattelement 56 in Richtung auf die Kammeröffnung 14 ausgelenkt und Flüssigkeit (oder Gas, Lösung) wird durch die Einlassöffnung 44 in die Kammer 30 transportiert. Durch periodisches Umpolen der an das Piezoelement 48 angelegten Spannung wird somit stetig Flüssigkeit (oder Gas, Lösung) von dem Einlasskanal 44 in den Hohlraum 30 und aus dem Hohlraum 30 in den Auslasskanal 46 transportiert, d. h. die Pumpe befindet sich im Förderbetrieb.

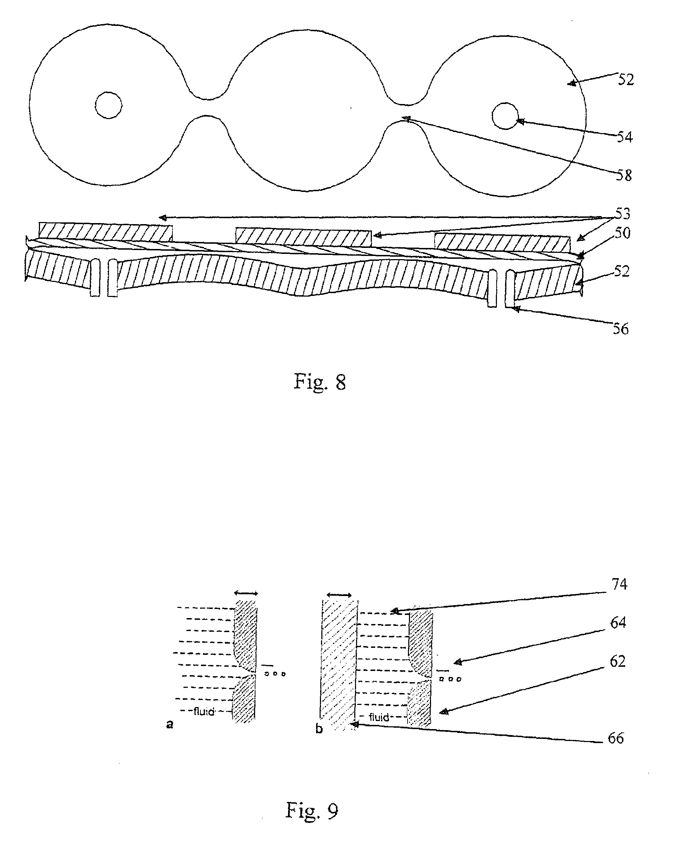

Fig. 8 zeigt eine Unteransicht einer erfindungsgemäßen dreiteiligen Kammer (oben) und eine Querschnittsansicht einer Mikropumpe gemäß einer zweiten Ausführungsform, welche die dreiteilige Kammer als Pumpenkammer nutzt (unten). Die Kammer umfasst eine erste 50 und eine zweite Hälfte 52, die jeweils drei runde Segmente aufweisen und wie oben erläutert und anhand der Fig. 1 bis 6 beschrieben miteinander verbunden und thermisch verformt sind. Die beiden außen liegenden Randsegmente der zweiten Hälfte 52 weisen jeweils eine Öffnung 54 auf, die für die Verwendung der Kammer als Pumpenkammer in der in Fig. 8 (unten) gezeigten Mikropumpe mit einem Ventilsitz 56 versehen ist. Des Weiteren ist jeweils ein unabhängig ansteuerbarer Aktor 53 (z. B. ein Piezoelement) auf jedem der drei Segmente der ersten Kammerhälfte 50 vorgesehen, mit dem die Auslenkung des jeweiligen Segments gesteuert werden kann. Durch Betätigung der äußeren, an den Randsegmenten angebrachten Aktoren 53 kann das jeweilige Segment der ersten Hälfte 50 mit dem entsprechenden Ventilsitz 56 so in Kontakt gebracht werden, dass keine Fluidaufnahme oder -abgabe über die jeweilige Öffnung 54 möglich ist (d. h. das Ventil ist geschlossen). Dieser Kontakt kann durch umgekehrte Betätigung des entsprechenden Aktors 53 (z. B. durch Umpolen der angelegten Spannung bei Benutzen eines Piezoelements als Aktor 53) wieder gelöst werden, wodurch das Ventil geöffnet wird. Des Weiteren stehen die beiden Randsegmente der Kammer mit dem mittleren Segment über kurze Kanäle 58 in Fluidverbindung. Diese Kanäle 58 entstehen bei der Verbindung und Verformung der beiden Kammerhälften 50, 52 (konturierte Verbindungsnaht) und erfordern somit keinen gesonderten Herstellungsschritt. Bei Betrieb der in Fig. 8 (unten) gezeigten Mikropumpe wird der an dem mittleren Kammersegment angebrachte Aktor 53 zum Ansaugen und Verdrängen von Fluid in dem zwischen den beiden Kammerhälften 50, 52 ausgebildeten Hohlraum verwendet. Die Fluidaufnahme erfolgt hierbei über eine der beiden Öffnungen 54, während die andere Öffnung 54 mit Hilfe des entsprechenden Aktors 53 geschlossen gehalten wird. Bei der Fluidabgabe werden die beiden Randaktoren 53 umgekehrt betätigt, so dass die während der Fluidaufnahme geöffnet gehaltene Öffnung 54 geschlossen und die während der Fluidaufnahme geschlossen gehaltene Öffnung 54 geöffnet wird. Durch eine zeitlich abgestimmte, periodische Ansteuerung der Randaktoren 53 und des mittleren Aktors 53 wird somit ein Transport von Fluid über die eine Öffnung 54 in die Kammer hinein und über die andere Öffnung 54 aus der Kammer heraus bewirkt, wodurch die Pumpe zur Fluidförderung genutzt werden kann.

Die oben beschriebene Pumpe ist jedoch nur ein Einsatzgebiet für die Kammer(n) der Erfindung. Andere Verwendungszwecke wurden oben bereits genannt, wie beispielsweise die Verwendung als Filterkammer, Sensorkammer oder zur Erzeugung von Aerosolen.

Fig. 9a und b zeigen prinzipielle Skizzen, um die Funktion einer oszillierenden Membran zur Erzeugung von Aerosolen zu erläutern. Eine oder mehrere gleichartige Öffnungen 64 mit kleinem Austrittsdurchmesser (vorzugsweise im Bereich von 1 bis 10 µm) sind in einer Kammerwand 62 vorgesehen und stehen mit einer in der Kammer enthaltenen Flüssigkeit 74 in Kontakt. Die Kammeraußenseite ist zur Atmosphäre hin offen. Zur Erzeugung von Aerosolen wird die Flüssigkeit 74 mit Druckschwankungen beaufschlagt, die durch schnelle Oszillationen einer Kammerwand erzeugt werden. Vorzugsweise oszilliert hierbei die Kammerwand 62, in der die Öffnungen 64 enthalten sind (Fig. 9a) oder eine Wand 66, die direkt gegenüber von den Öffnungen angeordnet ist (Fig. 9b). Die Druckschwankungen treiben die Flüssigkeit 74 durch die Öffnungen 64 in Form von kleinen Tröpfchen, wodurch auf der Atmosphärenseite ein Aerosol entsteht.

Fig. 10a und b zeigen Querschnittsansichten von Kammern unterschiedlicher Ausführungsformen zur Erzeugung von Aerosolen. In der in Fig. 10a dargestellten Ausführungsform sind eine oder mehrere kleine Öffnungen 64 in der ersten Kammerhälfte 10 vorgesehen. Ein Aktor 70 zur Erzeugung von Druckoszillationen ist durch eine bimorphe Kombination der ersten Kammerhälfte 10 mit einem piezoelektrischen Ring 72 verwirklicht. Der Aktor 70 wird mit einer Wechselspannung im Ultraschall-Frequenzbereich angeregt (typische Frequenzen 40 bis 200 kHz), vorzugsweise in der Nähe einer mechanischen Resonanz der Kammer. Die Kammer ist zumindest zum Teil mit einer Flüssigkeit 74 gefüllt, so dass die Öffnungen 64 wenigstens mit der Flüssigkeit 74 benetzt werden. Gemäß einer weiteren Ausführungsform können die kleinen Öffnungen 64 auch in der zweiten Kammerhälfte 12 angebracht werden, die gegebenenfalls dazu mit einem dünnen Wandsegment 78 versehen ist (Fig. 10b). In diesem Fall kann der Aktor 71 entweder wie der in Fig. 10a gezeigte Aktor 70 aufgebaut sein oder der piezoelektrische Ring 72 kann z. B. durch eine piezoelektrische Scheibe 73 ersetzt werden, da in solch einer Ausführungsform keine Öffnung des Piezoelements notwendig ist.

Die Erfindung ist nicht auf die beschriebenen Ausführungsformen begrenzt, sondern kann im Umfang der folgenden Patentansprüche modifiziert werden.

## Patentansprüche

1. Kammer, insbesondere Pumpenkammer, umfassend eine erste Hälfte (10) und eine zweite Hälfte (12), wobei
- die erste (10) und die zweite Hälfte (12) durch eine geschlossene Verbindungsnaht (20) flächig miteinander verbunden sind,
- wenigstens eine der beiden Hälften (10, 12) wenigstens eine Öffnung (14) aufweist, die innerhalb der Verbindungsnaht (20) liegt,
- wenigstens die zweite Hälfte (12) innerhalb der geschlossenen Verbindungsnaht (20) derart thermisch verformt ist, dass sie relativ zu der Verbindungsfläche mit der ersten Hälfte (10) gewölbt ausgebildet ist, so dass ein Hohlraum (30) zwischen der ersten (10) und zweiten Hälfte (12) gebildet ist, und
- die zweite Hälfte (12) wenigstens eine Verformungsnaht (22) aufweist, die innerhalb der Verbindungsnaht (20) liegt.

2. Kammer nach Anspruch 1, bei der die Verbindungsnaht (20) eine Schweißnaht, vorzugsweise eine Laserschweißnaht, ist.

3. Kammer nach Anspruch 1 oder 2, bei der die Verformungsnaht (22) eine Laserumformungsnaht ist.

4. Kammer nach Anspruch 3, die wenigstens eine geschlossen und/oder offen ausgebildete Verformungsnaht (22) aufweist.

5. Kammer nach einem der vorhergehenden Ansprüche, bei der die erste (10) und die zweite Hälfte (12) eine Dicke senkrecht zu ihrer Fläche aufweisen, wobei die Dicke der ersten Hälfte (10) geringer als die der zweiten Hälfte (12) ist.

6. Kammer nach einem der vorhergehenden Ansprüche, bei der die erste Hälfte (10) in Richtung senkrecht zu ihrer Fläche, relativ zu der zweiten Hälfte (12) elastisch auslenkbar ist.

7. Kammer nach Anspruch 6, bei der die Wölbung der zweiten Hälfte (12) an die maximale Auslenkung der ersten Hälfte (10) angepasst ist.

8. Kammer nach Anspruch 6 oder 7, bei der die erste Hälfte (10) mit einem piezoelektrischen Element (48) verbunden ist, mit dem die Auslenkung der ersten Hälfte (10) gesteuert werden kann.

9. Kammer nach einem der vorhergehenden Ansprüche, bei der ein Ventil in Fluidverbindung mit der Öffnung (14) der zweiten Hälfte (12) angeordnet ist.

10. Verfahren zur Herstellung einer Kammer, das die folgenden Schritte umfasst:
- Herstellung einer plattenförmigen ersten Hälfte (10) und einer plattenförmigen zweiten Hälfte (12),
- flächiges Verbinden der ersten (10) und der zweiten Hälfte (12) miteinander durch eine geschlossene Verbindungsnaht (20), und
- Verformen der mit der ersten Hälfte (10) verbundenen zweiten Hälfte (12), um einen Hohlraum (13) zwischen erster (10) und zweiter Hälfte (12) auszubilden, **dadurch gekennzeichnet, dass**
die Verformung der zweiten Hälfte (12) durch thermisches Verformen erfolgt.

11. Verfahren nach Anspruch 10, ferner umfassend einen Schritt, in dem wenigstens eine der beiden Hälften (10, 12) mit einer Öffnung (14) versehen wird, wobei die Verbindungsnaht (20) später die Öffnung (14) umgibt.

12. Verfahren nach Anspruch 10 oder 11, bei dem das Verbinden der ersten (10) und der zweiten Hälfte (12) miteinander durch Verschweißen, vorzugsweise durch Laserverschweißen, erfolgt.

13. Verfahren nach einem der Ansprüche 10 bis 12, bei dem die Verformung der zweiten Hälfte (12) durch Laserstrahlumformen erfolgt.

14. Verfahren nach einem der Ansprüche 10 bis 13, bei dem die plattenförmigen Hälften (10, 12) derart hergestellt werden, dass sie jeweils über Stege (15) in Rahmen (16, 18) gehalten sind.

15. Verfahren nach Anspruch 14, bei dem die Rahmen (16, 18) zusammen mit den plattenförmigen Hälften (10, 12) in Form von Endlosbändern zugeführt werden.

16. Kammer nach einem der Ansprüche 1 bis 9, bei dem die erste Hälfte (10) und/oder die zweite Hälfte (12) aus Metall besteht, vorzugsweise aus Stahl.

17. Pumpe, die eine Kammer nach einem der Ansprüche 1 bis 9 oder 16 oder mehrere Kammern nach einem der Ansprüche 1 bis 9 oder 16, wobei zumindest zwei der Kammern in Fluidverbindung miteinander stehen, umfasst.

## Claims

1. Chamber, in particular pump chamber, comprising a first half (10) and a second half (12), wherein
- the first (10) and the second half (12) are joined to one another to be two-dimensional by a closed connecting seam (20),
- at least one of the two halves (10, 12) has at least one opening (14) which lies within the connecting seam (20),
- at least the second half (12) is deformed thermally within the closed connecting seam (20) such that it is designed to be vaulted relative to the connecting surface with the first half (10), so that a cavity (30) is formed between the first (10) and second half (12), and
- the second half (12) has at least one deforming seam (22) which lies within the connecting seam (20).

2. Chamber according to claim 1, in which the connecting seam (20) is a weld seam, preferably a laser weld seam.

3. Chamber according to claim 1 or 2, in which the deforming seam (22) is a laser shaping seam.

4. Chamber according to claim 3, which has at least one deforming seam (22) designed to be closed and/or open.

5. Chamber according to one of the preceding claims, in which the first (10) and the second half (12) have a thickness vertically to their surface, wherein the thickness of the first half (10) is less than that of the second half (12).

6. Chamber according to one of the preceding claims, in which the first half (10) can be deflected resiliently in the direction vertically to its surface, relative to the second half (12).

7. Chamber according to claim 6, in which the vaulting of the second half (12) is adapted to the maximum deflection of the first half (10).

8. Chamber according to claim 6 or 7, in which the first half (10) is connected to a piezoelectric element (48), with which the deflection of the first half (10) may be controlled.

9. Chamber according to one of the preceding claims, in which a valve is arranged in fluid connection with the opening (14) of the second half (12).

10. Method for producing a chamber, which comprises the following steps:
- production of a plate-like first half (10) and a plate-like second half (12),
- two-dimensional joining of the first (10) and the second half (12) to one another by a closed connecting seam (20), and
- deforming the second half (12) joined to the first half (10) to form a cavity (13) between first (10) and second half (12), **characterised in that**
the deformation of the second half (12) is effected by thermal deformation.

11. Method according to claim 10, further comprising a step in which at least one of the two halves (10, 12) is provided with an opening (14), wherein the connecting seam (20) later surrounds the opening (14).

12. Method according to claim 10 or 11, in which joining of the first (10) and the second half (12) to one another is effected by welding, preferably by laser welding.

13. Method according to one of claims 10 to 12, in which the deformation of the second half (12) is effected by laser-jet shaping.

14. Method according to one of claims 10 to 13, in which the plate-like halves (10, 12) are produced such that they are held in frames (16, 18) in each case via bars (15).

15. Method according to claim 14, in which the frames (16, 18) together with the plate-like halves (10, 12) are supplied in the form of endless sheets.

16. Chamber according to one of claims 1 to 9, in which the first half (10) and/or the second half (12) consists of metal, preferably of steel.

17. Pump which comprises a chamber according to one of claims 1 to 9 or 16 or several chambers according to one of claims 1 to 9 or 16, wherein at least two of the chambers are in fluid connection with one another.

## Revendications

1. Chambre, en particulier chambre de pompe, comprenant une première moitié (10) et une deuxième moitié (12), où
- la première (10) et la deuxième moitié (12) sont reliées ensemble, en terme de surface, par une jonction (20) fermée,
- au moins l'une des deux moitiés (10, 12) présente au moins une ouverture (14) située à l'intérieur de la jonction (20),
- au moins la deuxième moitié (12) est déformée thermiquement à l'intérieur de la jonction (20) fermée, de manière qu'elle soit de forme bombée par rapport à la surface de liaison avec la première moitié (10), de manière qu'un espace creux (30) soit formé entre la première (10) et la deuxième moitié (12), et
- la deuxième moitié (12) présente au moins une jonction de déformation (22), située à l'intérieur du cordon de liaison (20).

2. Chambre selon la revendication 1, dans laquelle la jonction (20) est une soudure, de préférence une soudure au laser.

3. Chambre selon la revendication 1 ou 2, dans laquelle la jonction de déformation (22) est une jonction de reformage au laser.

4. Chambre selon la revendication 3, présentant au moins une jonction de déformation (22) fermée et/ou ouverte.

5. Chambre selon l'une des revendications précédentes, dans laquelle la première moitié (10) et la deuxième moitié (12) présentent une épaisseur, perpendiculairement à leur surface, l'épaisseur de la première moitié (10) étant plus petite que celle de la deuxième moitié (12).

6. Chambre selon l'une des revendications précédentes, dans laquelle la première moitié est susceptible de subir un débattement élastique dans une direction perpendiculaire à sa surface, par rapport à la deuxième moitié (12).

7. Chambre selon la revendication 6, dans laquelle la forme bombée de la deuxième moitié (12) est adaptée au débattement maximal de la première moitié (10).

8. Chambre selon la revendication 6 ou 7, dans laquelle la première moitié (10) est reliée à un élément (48) piézoélectrique, à l'aide duquel le débattement de la première moitié (10) peut être commandé.

9. Chambre selon l'une des revendications précédentes, dans laquelle une soupape est disposée en liaison fluidique avec l'ouverture (14) de la deuxième moitié (12).

10. Procédé de fabrication d'une chambre, comprenant les étapes suivantes :
- fabrication d'une première moitié (10) en forme de plaque et d'une deuxième moitié (12) en forme de plaque,
- liaison ensemble, en terme de surface, de la première (10) et de la deuxième moitié (12), au moyen d'une jonction (20) fermée, et
- déformation de la deuxième moitié (12) reliée à la première moitié (10), pour réaliser un espace creux (13) entre première (10) et deuxième moitié (12), **caractérisé en ce que**
la déformation de la deuxième moitié (12) s'effectue par déformation thermique.

11. Procédé selon la revendication 10, comprenant en outre une étape, dans laquelle au moins l'une des deux moitiés (10, 12) est munie d'une ouverture (14), la jonction (20) entourant ultérieurement l'ouverture (14).

12. Procédé selon la revendication 10 ou 11, dans lequel la liaison ensemble de la première (10) et de la deuxième moitié (12) s'effectue par soudage, de préférence par soudage laser.

13. Procédé selon l'une des revendications 10 à 12, dans lequel la déformation de la deuxième moitié (12) s'effectue par reformage au rayon laser.

14. Procédé selon l'une des revendications 10 à 13, dans lequel les moitiés (10, 12) en forme de plaque sont fabriquées de manière qu'elles soient maintenues chacune, par l'intermédiaire de nervures (15), dans des cadres (16, 18).

15. Procédé selon la revendication 14, dans lequel les cadres (16, 18) sont amenés, conjointement avec les moitiés (10, 12) en forme de plaque, sous forme de bandes sans fin.

16. Chambre selon l'une des revendications 1 à 9, dans laquelle la première moitié (10) et/ou la deuxième moitié (12) est/sont réalisée(s) en métal, de préférence en acier.

17. Pompe, comprenant une chambre selon l'une des revendications 1 à 9 ou 16, ou plusieurs chambres selon l'une des revendications 1 à 9 ou 16, sachant qu'au moins deux des chambres sont placées ensemble en une liaison fluidique.
